# EUROPÄISCHE PATENTANMELDUNG

(11) **EP 1 143 232 A1**
(43) Veröffentlichungstag der Anmeldung: **10.10.2001**
(21) Anmeldenummer: 01107096.8
(22) Anmeldetag: 22.03.2001
(51) Int. Cl.: G01L 19/12, F02M 35/09, B01D 35/143

(54) **Filtereinbauüberwachung**

(30) Priorität: 07.04.2000 DE 10017361
(71) Anmelder: FILTERWERK MANN & HUMMEL GMBH, 71631 Ludwigsburg (DE)
(72) Erfinder: Bartelt, Bertram, 71711 Steinheim (DE)
(74) Vertreter: Voth, Gerhard, Dipl.-Ing.

(57) **Zusammenfassung**

Differenzdruck-Messanordnung (10), welche zur Erkennung eines fehlerhaften oder fehlerhaft eingebauten Filterelementes (14) in ein Leitungssystem (11) dient. Das Leitungssystem (11) weist eine Rohseite (12) und eine Reinseite (13) auf. Das Filterelement (14) ist dichtend zwischen die Rohseite (12) und die Reinseite (13) eingebracht. Auf der Rohseite (12) ist eine erste Druckaufnahmeeinheit (15) und auf der Reinseite (13) ist eine zweite Druckaufnahmeeinheit (20) angeordnet. Beide Druckaufnahmeeinheiten (15,20) sind mit einer Auswertungseinheit (19) verbunden. In der Auswertungseinheit (19) wird der Differenzdruck zwischen der Rohseite (12) und der Reinseite (13) ermittelt und mit einem Mindest-Referenz-Druckwert verglichen. Sobald der ermittelte Differenzdruck geringer ist als der Mindest-Referenz-Druckwert, erfolgt eine Aktion der Auswertungseinheit (19). Weiterhin eine Auswerteeinheit (30), die eine Klappe (31) für ein Nebenfilter (33) schaltet, wenn ein Maximalwert überschritten ist.

## Beschreibung

Die Erfindung betrifft eine Differenzdruck-Messanordnung nach dem Oberbegriff des Patentanspruches 1.
Außerdem betrifft die Erfindung ein Verfahren zur Ermittlung des Differenzdruckes.

Es ist aus der DE 197 20 577 ein Differenzdruck-Messgerät bekannt, welches zur Ermittlung eines Differenzdruckes in einem Leitungssystem für ein Medium dient. Das Leitungssystem besitzt eine Rohseite und eine durch ein Filterelement getrennte Reinseite. Durch Verunreinigungen, welche auf der Rohseite des Leitungssystems in dem Medium enthalten sind, wird das Filterelement nach und nach zugesetzt. Mit zunehmender Zusetzung des Filterelementes steigt der Differenzdruck zwischen der Rohseite und der Reinseite an. Ab einem bestimmten Differenzdruck muss das Filterelement ausgetauscht werden, da ein zu großer Druckabfall auf der Reinseite vermieden werden muss. In diesem Dokument wird die Verwendung von Leuchtdioden mit unterschiedlicher Farbe als Warnhinweis zum Austauschen des Filterelementes beschrieben. Weiterhin werden akustische Warnsignale als Ergänzung zur optischen Anzeige vorgeschlagen.

Das Differenzdruck-Messgerät dient jedoch ausschließlich dem Zweck, bei einem zu hohen Differenzdruck durch ein zugesetztes Filterelement ein Warnsignal auszusenden. Dieses Differenzdruck-Messgerät erfasst keine zu geringen Druckdifferenzen, welche durch ein nicht vorhandenes, falsch eingebautes oder defektes Filterelement hervorgerufen würde. Dabei ist es für eine an das Leitungssystem anschließende Einheit, wie z.B. eine Brennkraftmaschine, eine Pumpe oder ein Reinraum unbedingt notwendig, dass aus dem Medium die Verunreinigungen entfernt werden.

Aufgabe der Erfindung ist die Schaffung einer Differenzdruck-Messanordnung, welche in einem Leitungssystem angeordnet ist und zur Erkennung von defekten oder nicht sachgemäß eingebauten Filtermedien dient. Diese Aufgabe wird durch die Merkmale des Patentanspruches 1 gelöst.

Die erfindungsgemäße Differenzdruck-Messanordnung ist in vorteilhafter Weise geeignet, mit einer Auswertungseinheit Differenzdrücke zu erfassen, welche geringer als ein Mindest-Referenz-Druckwert sind.

Hierzu ist die Differenzdruck-Messanordnung in ein Leitungssystem für ein Fluid integriert. Das Leitungssystem weist eine Rohseite mit einem Fluideinlass und eine durch ein Filterelement dichtend davon getrennte Reinseite mit einem Fluidauslass auf. Auf der Rohseite ist eine erste Druckaufnahmeeinheit, welche einen Rohdruck und auf der Reinseite ist eine zweite Druckaufnahmeeinheit angeordnet, welche einen Reindruck aufnimmt. Die Druckaufnahmeeinheiten können z.B. durch Rohrleitungen oder Sensoren gebildet werden.

Bildet eine erste Röhre die erste Druckaufnahmeeinheit, so weist die erste Röhre einen Röhrenanfang und ein Röhrenende auf. Der Röhrenanfang der ersten Röhre mündet kommunizierend in die Rohseite des Leitungssystems und das Röhrenende der ersten Röhre mündet in eine Auswertungseinheit. Dadurch wird der Rohdruck aufgenommen und an die Auswertungseinheit weitergeleitet. Die zweite Druckaufnahmeeinheit kann durch eine zweite Röhre gebildet werden, welche ebenfalls einen Röhrenanfang und ein Röhrenende aufweist. Der Röhrenanfang der zweiten Röhre mündet in die Reinseite des Leitungssystems und das Röhrenende der zweiten Röhre mündet in die Auswertungseinheit. Somit wird der Reindruck an die Auswertungseinheit weitergeleitet.

Werden die Druckaufnahmeeinheiten durch Sensoren gebildet, so ist ein erster Sensor auf der Rohseite und ein zweiter Sensor auf der Reinseite angeordnet. Der erste Sensor nimmt den Rohdruck auf und der zweite Sensor nimmt den Reindruck auf. Die Sensoren können durch unterschiedlichste physikalische Effekte, wie z.B. Widerstandsänderung, Leitfähigkeit, Kapazitätsänderung, Induktionsänderung, Magnetoelastik, Magnetostriktion, Elektrodynamischer Effekt oder Piezzoeffekt den Roh-bzw. Reindruck messen. Hierbei sind diverse Ausführungen der Sensoren denkbar, wie z.B. Quarz-Druckaufnehmer, Si-npn-Planar Transistor, Abstands- oder Flächengeber, Kohledruckdose oder magnetoelastischer Geber. Die von den Sensoren erfassten Drücke werden über eine Datenübertragungseinheit an die Auswertungseinheit übertragen. Die Datenübertragungseinheit kann z.B. durch Infrarotschnittstellen, Funk oder Kabel gebildet werden.

In der Auswertungseinheit wird die Differenz zwischen dem von der Datenübertragungseinheit übertragenen Rohdruck und Reindruck erfasst. Zur Erfassung der Differenz können Messinstrumente, welche z.B. Materialverformungen von Federn oder Membranen erfassen oder Recheneinheiten, welche die Differenz anhand der übermittelten Daten errechnen, verwendet werden. Diese Differenz muss größer sein, als ein vordefinierter Mindest-Referenz-Druckwert. Dieser Mindest-Referenz-Druckwert wird durch den Differenzdruck definiert, den ein neues, korrekt eingebautes und funktionsfähiges Filterelement bei geringster Fluidförderung in dem Leitungssystem erzeugt. Sobald die Fluidförderung ansteigt, steigt auch bei einem defekten Filterelement der Differenzdruck an.

Bei einer Brennkraftmaschine ist der Zustand der geringsten Fluidförderung beispielsweise der Teilllastbetrieb. Sobald dieser Mindest-Referenz-Druckwert unterschritten wird, bietet das Filterelement keine ausreichende Filtration des Fluides mehr. Dies kann durch ein falsch eingebautes Filterelement verursacht werden, bei dem ein Leckstrom ungefiltert um das Filterelement herum strömt. Weiterhin kann ein korrekt eingebautes Filterelement durch die Montage oder im Einsatz eine Leckagestelle im Filterelement oder einer Dichtung aufweisen, durch welche ungefiltertes Fluid von der Rohseite auf die Reinseite gelangt. Auch bei diesem Defekt ist der Differenzdruck geringer, als bei einem neuen, intakten Filterelement. Sollte durch einen Montagefehler kein Filterelement eingebaut sein, so herrscht zwischen der Rohseite und der Reinseite kein Differenzdruck. In diesem Fall würde das Fluid nicht gereinigt. Sobald der Differenzdruck zwischen der Rohseite und der Reinseite geringer als der Mindest-Referenz-Druckwert ist, führt die Auswertungseinheit eine Aktion aus. Diese Aktion kann ein Übersenden eines Signals an eine Steuerung, welche eine Handlung auslöst oder eine direkte Handlung sein. Eine mögliche Handlung ist das Umlenken des Fluides in eine andere Leitung, wodurch kein ungefiltertes Fluid auf die Reinseite gelangt.

Liegt der Differenzdruck zwischen der Rohseite und der Reinseite über dem Mindest-Referenz-Druckwert, so erfolgt seitens der Auswertungseinheit keine Aktion.

Gemäß einer weiteren Ausbildung der Erfindung ist der Mindest-Referenz-Druckwert durch eine mechanische Stelleinheit gebildet. Die mechanische Stelleinheit kann z.B. Membranen oder Federn enthalten, welche über eine Vorspannung verfügen und sich beim Unterschreiten des Mindest-Referenz-Druckwertes in eine Endlage bewegen und dort verbleiben. Dadurch kann ein Signal oder eine Aktion erzeugt werden. Bei einer Aktion kann z.B. das Fluid durch Umlegen eines Stellgliedes in eine Notleitung mit einem Ersatzfilterelement umgeleitet werden. Es ist aber auch möglich, dass die Auswertungseinheit ein Signal erzeugt, welches an anderer Stelle, wie z.B. an einem Bedienerpult ausgegeben wird

Eine Alternative zur mechanischen Stelleinheit ist die Verwendung einer Elektronik, in welcher der Mindest-Referenz-Druckwert gespeichert ist. Nachdem die Auswertungseinheit den Differenzdruck erfasst hat, wird er in digitaler Form mit dem Mindest-Referenz-Druckwert verglichen. Sobald der Differenzdruckwert kleiner ist, als der Mindest-Referenz-Druckwert, erfolgt ein Signal, welches unterschiedliche Auswirkungen haben kann. Eine Möglichkeit ist die Erzeugung eines Warnsignals. Eine weitere Möglichkeit ist die Ausgabe des Signals in eine Systemsteuerung, welche z.B. den Fluidstrom umleitet oder nachfolgende Geräte abschaltet.

Eine vorteilhafte Ausführung der Erfindung sieht zusätzlich zur Erfassung der Differenzdrücke, welche geringer sind als der Mindest-Referenz-Druckwert, die Erfassung von Differenzdrücken, welche größer sind als ein Maximal-Referenz-Druckwert, vor. Der Maximal-Referenz-Druckwert ist durch ein verbrauchtes Filterelement definiert, welches bei maximaler Förderung des Fluides durch das Leitungssystem eine maximal zulässige Druckdifferenz erzeugt. Die maximal zulässige Druckdifferenz ist von den nachfolgenden Vorgängen abhängig, wobei darauf zu achten ist, dass kein Vorgang gestört ist. Bei dieser Ausführung sind die Druckaufnahmeeinheiten und die Auswertungseinheit in der Lage, sowohl Druckdifferenzen unter dem Mindest-Referenz-Druckwert als auch über dem Maximal-Referenz-Druckwert zu erfassen.

Bei einer Brennkraftmaschine entspricht der Zustand maximaler Fluidförderung einem Volllastbetrieb, in welchem am meisten Luft zur Verbrennung erforderlich ist.

Gemäß einer weiteren Ausbildung der Erfindung ist zusätzlich zu der ersten Druckaufnahmeeinheit auf der Rohseite eine dritte Druckaufnahmeeinheit angeordnet. Analog zur Rohseite ist auf der Reinseite zusätzlich zu der zweiten Druckaufnahmeeinheit eine vierte Druckaufnahmeeinheit angeordnet. Bei dieser Ausbildung der Erfindung sind ist die erste und zweite Druckaufnahmeeinheit derart ausgebildet und mit der Auswertungseinheit verbunden, dass die Differenzdrücke, welche geringer als der Mindest-Differenz-Druck sind erfasst werden. Die dritte und vierte Druckaufnahmeeinheit ist derart ausgebildet, dass die Druckdifferenzen, welche größer als der Maximal-Referenz-Druckwert sind, erfasst werden. Dabei kann die dritte und vierte Druckaufnahmeeinheit mit der selben Auswertungseinheit, wie die erste und zweite Druckaufnahmeeinheit verbunden sein, oder eine separate Auswertungseinheit, welche ausschließlich zur Erfassung von Druckdifferenzen, welche größer als der Maximal-Referenz-Druckwert sind, aufweisen.

Eine besondere Ausführungsform der Erfindung ist die Anordnung in einem Ansaugleitungssystem für eine Brennkraftmaschine. Hierbei wird Luft von der Rohseite angesaugt und durch das Filterelement auf die Reinseite geleitet, wobei die Reinseite korrespondierend mit einem Verbrennungslufteinlass an der Brennkraftmaschine verbunden ist.

Es ist vorteilhaft, dass der Differenzdruck auf einer Ausgabeeinheit dargestellt ist. Hierbei ist die Auswertungselektronik mit der Ausgabeeinheit derart verbunden, dass die erfassten Differenzdrücke übertragen werden. Es sind unterschiedliche Ausgabeeinheiten denkbar. Eine Ausgabeeinheit kann z.B. den erfassten Differenzdruck als Wert anzeigen. Hierbei verfügt die Ausgabeeinheit über eine Anzeige, welche analog oder digital aufgebaut sein kann. Bei einer digitalen Anzeige kann ein Bediener den erfassten Wert ablesen. Bei einer analogen Anzeige kann diese in z.B. drei Bereiche, wie Differenzdruck zu gering, Differenzdruck normal und Differenzdruck zu hoch eingeteilt werden, wobei der Bediener ablesen kann, in welchem Zustand sich das Filterelement gerade befindet. Andere Ausgabeeinheiten stellen den Differenzdruck mit Hilfe von Leuchtzeichen dar, wobei Ausführungen mit verschiedenfarbigen Leuchten, insbesondere grüne und rote Leuchten denkbar sind. Hierbei kann die grüne Leuchte für einen Differenzdruck gewählt werden, der zwischen dem Minimal-Referenz-Druckwert und dem Maximal-Referenz-Druckwert liegt. Zur Darstellung eines Differenzdruckes, welcher unter dem Minimal-Referenz-Druckwert oder über dem Maximal-Referenz-Druckwert liegt, kann die rote Leuchte verwendet werden. Die Leuchten können an einer Anzeigetafel angeordnet sein, dass der Bediener mit einem Blick den Zustand des Filterelementes erkennt.

Gemäß einer weiteren Ausgestaltung der Erfindung weist die Auswertungselektronik eine Schnittstelle zur Erfassung des Betriebszustandes der Brennkraftmaschine auf. Anhand des Betriebszustandes der Brennkraftmaschine kann die Auswertungselektronik erkennen, in welchem Betriebszustand sich die Brennkraftmaschine befindet. Im Teillastbetrieb, bzw. Leerlauf kann der Minimal-Referenz-Druckwert unterschritten werden, da in diesem Zustand die geringste Luftmenge benötigt wird und das Filterelement den geringsten Strömungswiderstand und somit den geringsten Druckverlust bietet. Im Volllastbetrieb kann der Maximal-Referenz-Druckwert überschritten werden, da in diesem Zustand die größte Luftmenge für den Verbrennungsvorgang der Brennkraftmaschine benötigt wird. Durch den großen Bedarf an Luft bietet das Filterelement im Volllastbetrieb den größten Luftwiderstand und somit den größten Druckverlust.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Weitere Einzelheiten der Erfindung werden in den Zeichnungen anhand von schematischen Ausführungsbeispielen beschrieben.

Hierbei zeigt
- Figur 1: eine Differenzdruck-Messanordnung,
- Figur 2: eine Differenzdruck-Messanordnung und
- Figur 3: eine Differenzdruck-Messanordnung.

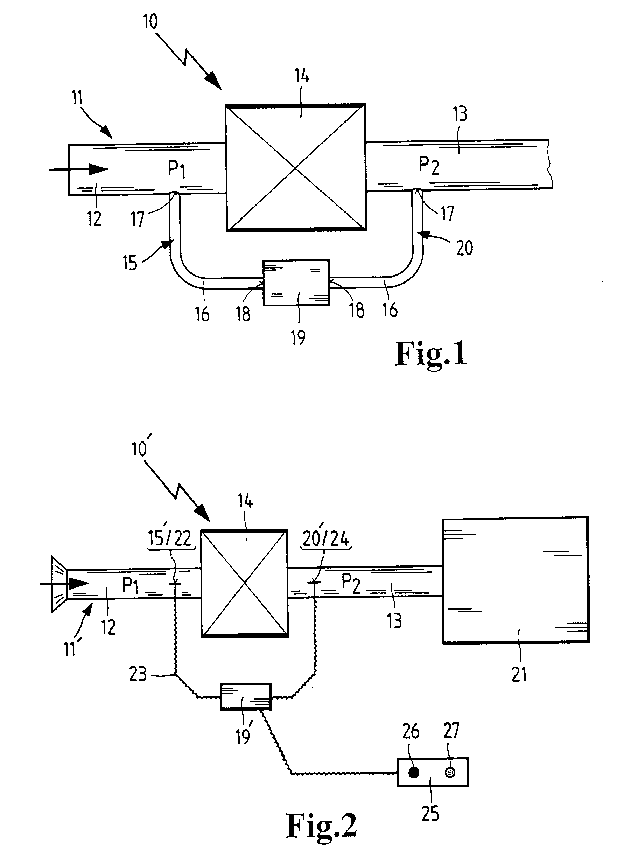

In Figur 1 ist eine Differenzdruck-Messanordnung 10 dargestellt, welche in einem Leitungssystem 11 angeordnet ist. Das Leitungssystem 11 weist eine Rohseite 12 und eine Reinseite 13 auf. Die Reinseite 13 ist durch ein Filterelement 14 dichtend von der Rohseite 12 getrennt, wodurch ein durch das Leitungssystem 11 in Pfeilrichtung strömendes Fluid durch das Filterelement 14 durchströmen muss um von der Rohseite 12 auf die Reinseite 13 zu gelangen. Das Fluid wird dabei gereinigt. Je länger das Filterelement 14 im Einsatz ist, desto stärker verschmutzt es und erhöht sich sein Strömungswiderstand.

Zur Erfassung eines auf der Rohseite 12 herrschenden Rohdruckes p1, ist eine erste Druckaufnahmeeinheit 15 derart angeordnet, dass der Rohdruck p1 von der ersten Druckaufnahmeeinheit 15 aufgenommen wird. Hierzu ist die erste Druckaufnahmeeinheit 15 als Röhre 16 mit einem Röhrenanfang 17 und einem Röhrenende 18 ausgebildet. Der Röhrenanfang 17 ist direkt mit der Rohseite 12 verbunden, wodurch das Fluid in die Röhre 16 einströmen kann. Das Röhrenende 18 ist mit einer Auswertungseinheit 19 verbunden.

Zur Erfassung eines auf der Reinseite 13 herrschenden Reindruckes p2, ist eine zweite Druckaufnahmeeinheit 20 derart angeordnet, dass der Reindruck p2 von der zweiten Druckaufnahmeeinheit 20 aufgenommen wird. Hierzu ist die zweite Druckaufnahmeeinheit 20 wie die erste Druckaufnahmeeinheit 15 als Röhre 16 ausgebildet. Der Röhrenanfang 17 der zweiten Druckaufnahmeeinheit 20 ist jedoch mit der Reinseite 13 derart verbunden, dass das Fluid auf der Reinseite 13 in die zweite Druckaufnahmeeinheit 20 einströmen kann. Das Röhrenende 18 der zweiten Druckaufnahmeeinheit 20 ist, wie das Röhrenende 18 der ersten Druckaufnahmeeinheit 15, mit der Auswertungseinheit 19 verbunden.

Die Auswertungseinheit 19 enthält einen gespeicherten Mindest-Referenz-Druckwert. Dieser kann in Form einer vorgespannten Feder oder Membran in der Auswertungseinheit 19 gespeichert sein und beim Unterschreiten des Mindest-Referenz-Druckwertes eine Aktion auslösen.

In Figur 2 ist eine Differenzdruck-Messanordnung 10' dargestellt, welche in einem Leitungssystem 11' zur Zuführung von Luft für einen Verbrennungsprozess einer Brennkraftmaschine 21 angeordnet ist. Das Leitungssystem 11' weist eine Rohseite 12, eine Reinseite 13 und ein die Rohseite 12 von der Reinseite 13 dichtend trennendes Filterelement 14 auf. In dem Leitungssystem 11' auf der Rohseite 12 ist eine erste Druckaufnahmeeinheit 15' in Form eines ersten Sensors 22 angeordnet. Der erste Sensor 22 verfügt über eine Datenübertragungseinheit 23, welche z.B. in Form eines Kabels, einer Infrarotschnittstelle oder per Funk den erfassten Rohdruck p1 an eine Auswertungseinheit 19' leitet. Auf der Reinseite 13 ist analog zur Rohseite 12 eine zweite Druckerfassungseinheit 20' in Form eines zweiten Sensors 24 angeordnet. Der zweite Sensor 24 übermittelt den erfassten Reindruck p2 an die Auswertungseinheit 19'. In der Auswertungseinheit 19' wird die Differenz der erfassten Drücke ermittelt und mit einem Mindest-Referenz-Druckwert verglichen. Anschließend erfolgt ein Signal an eine Ausgabeeinheit 25, welche bei diesem Ausführungsbeispiel eine rote Leuchte 26 und eine grüne Leuchte 27 aufweist. Ist der ermittelte Differenzdruck kleiner als der Mindest-Referenz-Druckwert, so bewirkt das ausgesendete Signal, dass die rote Leuchte 26 blinkt oder leuchtet, je nachdem, wie die Ausgabeeinheit 25 eingestellt ist. Ist der Differenzdruck größer als der Mindest-Referenz-Druckwert, so bewirkt das Signal, dass die grüne Leuchte 27 leuchtet.

Bei diesem Ausführungsbeispiel ist die Auswertungseinheit 19' in der Lage, zusätzlich zur Erfassung von Differenzdrücken, welche geringer als der Mindest-Referenz-Druckwert sind, auch Differenzdrücke zu erfassen, welche größer als ein Maximal-Referenz-Druckwert sind. Somit wird der ermittelte Differenzdruck auch mit dem Maximal-Referenz-Druckwert verglichen und sobald der Differenzdruck größer ist als der Maximal-Referenz-Druckwert erfolgt ein Signal an die Ausgabeeinheit, welches bewirkt, dass die rote Leuchte 26 blinkt.

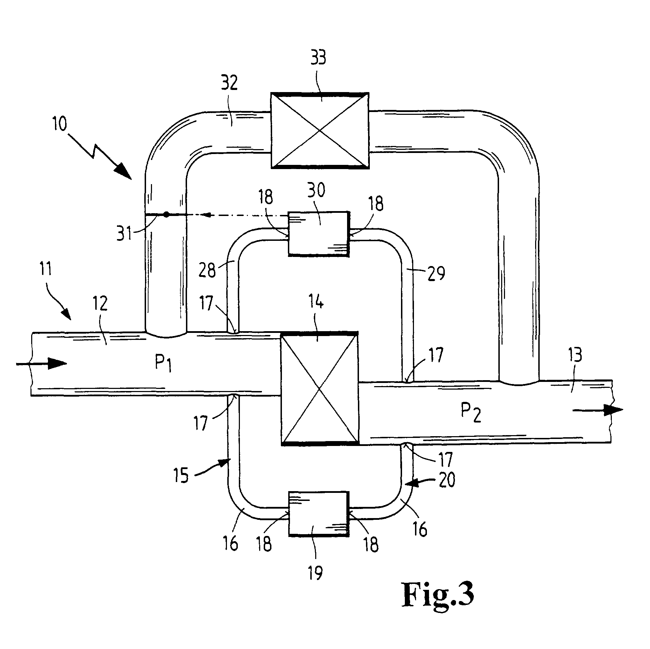

In Figur 3 ist eine Differenzdruck-Messanordnung 10 dargestellt. Diese Differenzdruck-Messanordnung 10 ist in einem Leitungssystem 11 für ein zu reinigendes Fluid angeordnet. Das Leitungssystem 11 besitzt eine Rohseite 12 und eine Reinseite 13. Die Reinseite 13 ist durch ein Filterelement 14 dichtend von der Rohseite 12 getrennt. Das Fluid strömt in Pfeilrichtung von der Rohseite 12 durch das Filterelement 14 auf die Reinseite 13. Beim Durchtritt des Fluides durch das Filterelement 14 werden Verunreinigungen, welche in dem Fluid enthalten sind, abgeschieden. Diese Verunreinigungen setzen das Filterelement 14 nach und nach zu, wodurch sich der Strömungswiderstand des Filterelementes 14 erhöht. In dem Leitungssystem 11 ist auf der Rohseite 12 eine erste Druckaufnahmeeinheit 15, welche als Röhre 16 mit einem Röhrenanfang 17 und einem Röhrenende 18 ausgebildet ist, angeordnet. Der Röhrenanfang 17 ist korrespondierend mit der Rohseite 12 und das Röhrenende 18 mit einer Auswertungseinheit 19 verbunden. Auf der Reinseite 13 ist eine zweite Druckaufnahmeeinheit 20 angeordnet, welche ebenfalls als Röhre 16 mit einem Röhrenanfang 17 und einem Röhrenende 18 ausgebildet ist. Bei der zweiten Druckaufnahmeeinheit 20 ist der Röhrenanfang 17 mit der Reinseite 13 und das Röhrenende 18 mit der Auswertungseinheit 19 verbunden. Die Auswertungseinheit 19 ist derart gestaltet, dass das Fluid nicht von der Rohseite 12 auf die Reinseite 13 strömen kann. Zur Erfassung des Differenzdruckes wird ausschließlich der Rohdruck p1 mit dem Reindruck p2 verglichen. Hierzu können die Röhren 16 am Röhrenende 17 eine Membran aufweisen, welche sich entsprechend dem anliegenden Druck verformt, wodurch der Differenzdruck ermittelt wird. Bei diesem Ausführungsbeispiel ist die erste Druckaufnahmeeinheit 15, die zweite Druckaufnahmeeinheit 20 und die Auswertungseinheit 19 zur Erfassung von Differenzdrücken vorgesehen, welche geringer sind, als ein Mindest-Referenz-Druckwert.

Zur Erfassung von Differenzdrücken, welche größer sind als ein Maximal-Referenz-Druckwert, sind eine dritte Druckaufnahmeeinheit 28 auf der Rohseite 12, eine vierte Druckaufnahmeeinheit 29 auf der Reinseite 13 und eine zweite Auswertungseinheit 30, welche mit der dritten und vierten Druckaufnahmeeinheit 28, 29 verbunden ist, vorgesehen. Die zweite Auswertungseinheit 30 ist mit einer Klappe 31 verbunden, welche in einer Nebenleitung 32 angeordnet ist. Die Nebenleitung 32 ist einerseits mit der Rohseite 12 und andererseits mit der Reinseite 13 des Leitungssystems 11 verbunden. Weiterhin weist die Nebenleitung 32 ein Nebenfilter 33 auf, welcher zur Reinigung des Fluides dient, wenn das Fluid durch die Nebenleitung 32 strömt. Die Klappe 31 verschließt die Nebenleitung 32, solange der Differenzdruck den Maximal-Referenz-Druck nicht überschreitet. Dadurch strömt das Fluid durch das Filterelement 14. Sobald der Differenzdruck den Maximal-Referenz-Druckwert überschreitet, veranlasst die zweite Auswertungseinheit 30, dass die Klappe 31 die Nebenleitung 32 frei gibt. Dadurch strömt das Fluid sowohl durch das Filterelement 14, als auch durch den Weg des geringsten Widerstandes, die Nebenleitung 32 mit dem Nebenfilter 33. Der Nebenfilter 33 besitzt im wesentlichen die selben Reinigungseigenschaften wie das Filterelement 14, wobei der Nebenfilter 33 und das Filterelement 14 identisch sein können.

Eine Umleitung des Fluides in die Nebenleitung 32 kann auch beim Unterschreiten des Mindest-Referenz-Druckwertes erfolgen. Hierbei sendet dann die Auswertungseinheit 19 ein entsprechendes Signal aus.

## Patentansprüche

1. Differenzdruck-Messanordnung (10) zur Ermittlung eines Differenzdruckes in einem Leitungssystem (11) für ein Fluid mit einer Rohseite (12) und einer Reinseite (13),
- wobei die Rohseite (12) von der Reinseite(13) durch ein Filterelement (14) dichtend getrennt ist,
- wobei auf der Rohseite (12) eine erste Druckaufnahmeeinheit (15) und auf der Reinseite (13) eine zweite Druckaufnahmeeinheit (20) angeordnet ist,
- die erste Druckaufnahmeeinheit (15) auf der Rohseite (12) mit der zweiten Druckaufnahmeeinheit (20) auf der Reinseite (13) korrespondierend verbunden ist **dadurch gekennzeichnet, dass**
eine Auswertungseinheit (19) zur Erfassung von Differenzdrücken vorgesehen ist, die geringer als ein Mindest-Referenz-Druckwert sind, wobei der Mindest-Referenz-Druckwert geringer als der an einem neuen, korrekt eingebauten und funktionsfähigen Filterelement (14) anliegende Differenzdruck ist.

2. Differenzdruck-Messanordnung (10) nach Anspruch 1, **dadurch gekennzeichnet, dass** der Mindest-Referenz-Druckwert durch eine mechanische Stelleinheit gebildet ist.

3. Differenzdruck-Messanordnung (10) nach Anspruch 2, **dadurch gekennzeichnet, dass** der Mindest-Referenz-Druckwert in einer Elektronik hinterlegt ist und die Druckaufnahmeeinheiten (15,20) mit der Elektronik verbunden sind.

4. Differenzdruck-Messanordnung (10) nach einem der vorangehenden Ansprüche, **dadurch gekennzeichnet, dass** die erste und zweite Druckaufnahmeeinheit (15, 20) und die Auswertungseinheit (19) zusätzlich zur Erfassung von Differenzdrücken vorgesehen ist, die größer als ein Maximal-Referenz-Druckwert sind, wobei der Maximal-Referenz-Druckwert größer als der maximal zulässige Differenzdruck eines verbrauchten Filterelementes (14) ist.

5. Differenzdruck-Messanordnung nach einem der Ansprüche 1 bis 4, **dadurch gekennzeichnet, dass**
- auf der Rohseite (12) zusätzlich zu der ersten Druckaufnahmeeinheit (15) eine dritte Druckaufnahmeeinheit (28) angeordnet ist,
- auf der Reinseite (13) zusätzlich zu der zweiten Druckaufnahmeeinheit (20) eine vierte Druckaufnahmeeinheit (29) angeordnet ist,
- die dritte Druckaufnahmeeinheit (28) korrespondierend mit der vierten Druckaufnahmeeinheit (29) verbunden ist,
- die Auswertungseinheit (19) zur Erfassung von Differenzdrücken vorgesehen ist, die größer als der Maximal-Referenz-Druckwert ist.

6. Differenzdruck-Messanordnung (10) nach einem der vorangehenden Ansprüche, **dadurch gekennzeichnet, dass** die Differenzdruck-Messanordnung (10) in dem Leitungssystem (11) einer Brennkraftmaschine (21) angeordnet ist.

7. Differenzdruck-Messanordnung (10) nach einem der vorangehenden Ansprüche, **dadurch gekennzeichnet, dass** die Druckdifferenz auf einer Ausgabeeinheit (25) dargestellt ist.

8. Differenzdruck-Messanordnung (10) nach einem der Ansprüche 6 oder 7, **dadurch gekennzeichnet, dass** die Auswertungseinheit (19) eine Schnittstelle zur Erfassung des Betriebszustandes der Brennkraftmaschine (21) aufweist.

9. Verfahren zur Ermittlung des Differenzdruckes mit einer Differenzdruck-Messanordnung (10) nach einem der vorangehenden Ansprüche, wobei
- in dem Leitungssystem (11) auf der Rohseite (12) ein Rohdruck (P1) und auf der, durch das Filterelement (14) getrennten, Reinseite (13) ein Reindruck (P2) herrscht,
- die erste Druckaufnahmeeinheit (15), welche auf der Rohseite (12) angeordnet ist, den Rohdruck (P1) und die zweite Druckaufnahmeeinheit (20) auf der Reinseite (13) den Reindruck (P2) aufnimmt,
- der Rohdruck (P1) und der Reindruck (P2) an die Auswertungseinheit (19) übermittelt werden,
- die Auswertungseinheit (19) den Differenzdruck zwischen der Rohseite (12) und der Reinseite (13) erfasst
**dadurch gekennzeichnet, dass**
- die Auswertungseinheit (19) den erfassten Differenzdruck mit dem Mindest-Referenz-Druckwert vergleicht,
- die Auswertungseinheit (19), sobald der erfasste Differenzdruck kleiner als der Mindest-Referenz-Druck ist, eine Aktion ausführt.

10. Verfahren zur Ermittlung des Differenzdruckes nach Anspruch 9, **dadurch gekennzeichnet, dass**
- die Auswertungseinheit (19) den Differenzdruck mit einem Maximal-Referenz-Druckwert vergleicht,
- die Auswertungseinheit (19), sobald der erfasste Differenzdruck größer als der Maximal-Referenz-Druckwert ist, eine Aktion ausführt.
